Europäisches Patentamt

European Patent Office

Office européen des brevets

(19)

(11) Numéro de publication: **0 118 745**
**B1**

(12) **FASCICULE DE BREVET EUROPEEN**

(45) Date de publication du fascicule du brevet: **11.05.88**

(51) Int. Cl.⁴: **B 60 C 9/00,** D 03 D 1/00

(21) Numéro de dépôt: **84101182.8**

(22) Date de dépôt: **06.02.84**

(54) **Nappe de renfort pour enveloppe de pneumatique constituée au moins en partie par un tissu avec un corps tridimensionnel; enveloppes de pneumatiques comportant au moins une telle nappe; procédé permettant d'obtenir ces enveloppes.**

(30) Priorité: **16.02.83 FR 8302625**

(43) Date de publication de la demande:
**19.09.84 Bulletin 84/38**

(45) Mention de la délivrance du brevet:
**11.05.88 Bulletin 88/19**

(84) Etats contractants désignés:
**AT BE CH DE GB IT LI LU NL SE**

(56) Documents cités:
**DE-C- 411 441**
**FR-A- 438 109**
**FR-A-2 421 969**
**GB-A- 19 412**
**GB-A- 139 562**
**GB-A- 168 619**
**US-A-1 335 311**
**US-A-1 347 847**
**US-A-3 205 119**
**US-A-3 774 662**

(73) Titulaire: **MICHELIN & CIE (Compagnie Générale des Etablissements Michelin) Société dite:**
**4 rue du Terrail**
**F-63000 Clermont-Ferrand (FR)**

(72) Inventeur: **Merle, Michel**
**219 rue de Blanzat**
**F-63100 Clermont-Ferrand (FR)**

(74) Mandataire: **Doussaint, Jean-Marie et al**
**MICHELIN & CIE Service K. Brevets**
**F-63040 Clermont-Ferrand Cedex (FR)**

Courier Press, Leamington Spa, England.

## Description

L'invention concerne des nappes de renfort destinées à être utilisées dans le sommet d'une de pneumatique. Les enveloppes de pneumatiques comportent des armatures, dites "armature de renfort", destinées à rigidifier une ou plusieurs parties de ces enveloppes, ces armatures étant constituées chacune d'au moins une nappe dite "nappe de renfort".

Les enveloppes de pneumatiques comportent notamment une armature de renfort destinée à rigidifier leur sommet pour permettre à ce sommet de supporter les contraintes dues au roulage. Cette armature est appelée "armature de sommet" dans le suite de cet exposé.

Chaque nappe de renformt a en général une structure pratiquement bidimensionnelle, sous forme par exemple d'un ensemble de câbles de renfort disposés sur un seule épaisseur.

De telles nappes peuvent être utilisées telles quelles lors de la réalisation d'enveloppes de pneumatiques par confection sur un tambour ou par coulée dans un moule, comme décrit par exemple dans la demande de brevet japonais publiée après examen sous le n° 57-12 687, ou dans la demande de brevet européen publiée sous le n° 5 423. Dans ces procédés, on ne dispose pas ces nappes directement sur la surface d'un tambour ou d'un moule, car les enveloppes auraient dans ce cas une fragilité excessive lors du roulage. D'autre part, pour conférer aux enveloppes de pneumatiques les caractéristiques mécaniques nécessaires, il est indispensable de disposer ces nappes à un niveau déterminé dans l'épaisseur du sommet. On est donc conduit à disposer ces nappes sur une matière que l'on a placée au préalable sur la surface du tambour ou du moule pour que ces nappes soient protégées par une épaisseur notable de matière dans les enveloppes terminées. Ces techniques conduisent à des opérations complexes et/ou coûteuses qui provoquent des variations de qualité d'une enveloppe à l'autre au cours d'une fabrication.

Il a été proposé dans la DE—A—2 830 331 de munir ces nappes d'ergots et de disposer ensuite ces nappes dans un moule de telle sorte que les ergots s'appuient sur la surface du noyau du moule. On vise ainsi à enrober les nappes de tout côté par la matière coulée. Le nombre de ces ergots est nécessairement limité, d'où la formation de zones de contact peu nombreuses et de sections individuelles importantes. Il s'ensuit des discontinuités notables à l'intérieur de l'enveloppe et des risques de collage défectueux. D'autre part, ces ergots provoquent une rupture dans la symétrie de révolution, à l'intérieur de l'enveloppe, du fait que les nappes prennent une forme pratiquement prismatique. Tous ces inconvénients subsistent même si la matière qui forme les ergots et la matière coulée sont analogues ou identiques et ces inconvénients sont la source de phénomènes vibratoires qui sont nuisibles à la fois au confort et à la durée de vie de l'enveloppe.

La demande de brevet FR—A—2 421 969 décrit un tissu de structure tridimensionnelle comportant deux groupes de fils de chaîne: les fils de chaîne d'un premier groupe sont distribués pour constituer le corps du tissu, tandis que les fils de chaîne du second groupe sont distribués pour former au moins une nappe tissée séparatrice. Ce tissu permet ainsi de constituer un dispositif de liaison à deux matériaux de natures différentes, sans pour cela que les produits en question se trouvent en contact, du fait de la présence de la nappe séparatrice. Un tel tissun'est pas apte à la réalisation d'armatures de renfort pour enveloppe de pneumatique.

Le brevet DE—C—411 441 (correspondant au préambule de la revendication 1) décrit un tissu pour enveloppes de pneumatiques comportant des fils principaux de renfort qui sont constitués par des fils de chaîne rectilignes. Ces fils de renfort sont séparés par des fils de chaîne ondulés et des fils de trame qui sont disposés au-dessus et au-dessous des fils de renfort. Les fils de renfort constituent donc l'ossature de ce tissu qui ne peut pas conserver sa structure lorsqu'on enlève les fils de renfort.

Le but de l'invention est d'éliminer les inconvénients précités.

La solution à ce problème est une nappe de renfort telle qu'elle est caractérisée dans la revendication principale 1.

L'invention concerne également les enveloppes de pneumatiques comportant au moins une nappe de renfort conforme à l'invention, ainsi qu'un procédé permettant d'obtenir ces enveloppes.

Les exemples de réalisation qui suivant ainsi que les figures toutes schématiques du dessin correspondant à ces exemples sont destinés à illustrer l'invention et à en faciliter la compréhension sans toutefois en limiter la portée.

Sur le dessin:

—la figure 1 représente en coupe radiale une enveloppe de pneumatique avec une armature de sommet comportant deux nappes de renfort conformes à l'invention;

—la figure 2 représente, vue de dessus, une partie de l'armature de sommet de l'enveloppe représentée à la figure 1;

—la figure 3 représente, vue de dessus, une portion de la nappe inférieure de l'armature de sommet représentée aux figures 1 et 2, cette nappe étant constituée d'un tissu avec un corps tridimensionnel;

—la figure 4 représente en coupe une portion de la nappe inférieure représentée à la figure 3, cette coupe étant effectuée selon la ligne IV—IV de la figure 3;

—la figure 5 représente en coupe radiale une partie d'un moule utilisé pour la réalisation de l'enveloppe représentée à la figure 1;

—la figure 6 représente un fil de chaîne ondulé entrant dans la constitution du corps tridimensionnel représenté aux figures 3, 4.

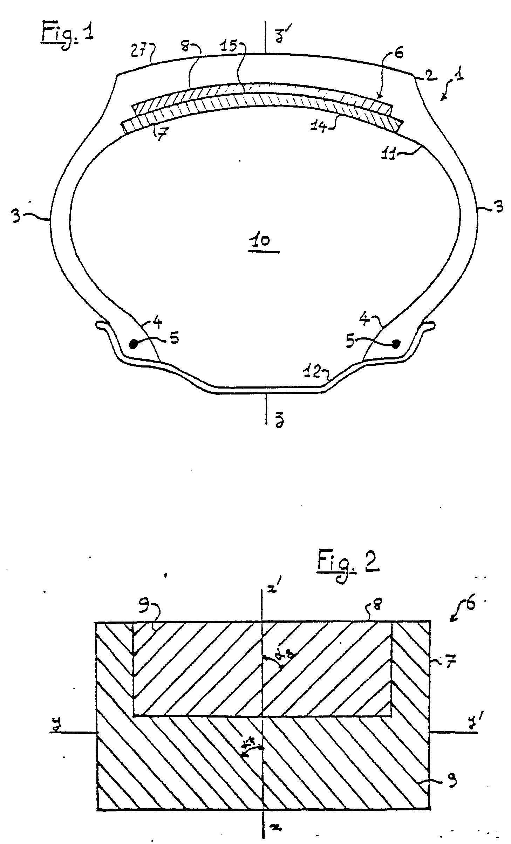

On voit à la figure 1 une enveloppe de pneumatique 1. Cette enveloppe 1 comporte un sommet 2, deux flancs 3, deux bourrelets 4, chaque bourrelet étant par exemple renforcé avec une triangle 5.

Le sommet 2 comporte une armature de renfort 6, cette armature de sommet 6 est constituée de deux nappes 7, 8 superposées, parfois appelées "nappes de travail" dans l'industrie des pneumatiques, chacune de ces nappes 7, 8 étant conforme à l'invention.

La figure 2 représente, vue de dessus, une partie de ces nappes 7, 8, toute la partie du somme 2 située au-dessus de ce nappes étant supposée enlevée. Chacune des nappes 7, 8 comporte des fils de renfort 9 parallèles entre eux, l'orientation des fils 9 d'une nappe étant croisée avec celle des fils de renfort 9 de l'autre nappe. Pour la clarté du dessin, les autres éléments entrant dans la composition des nappes 7, 8 n'ont pas été représentés à la figure 2, ces éléments étant décrits plus en détail ultérieurement. Les fils 9 de la nappe 7 font l'angle aigu $\alpha_7$ avec le plan équatorial de l'enveloppe 1, ce plan équatorial étant le plan perpendiculaire à l'axe de révolution de l'enveloppe 1 et passant par le milieu du sommet 2. A la figure 2, ce plan équatorial est schématisé par la ligne xx' et l'axe de révolution de l'enveloppe 1 est schématisé par la ligne yy', le plan équatorial étant schématisé par la ligne zz' à la figure 1. Les fils 9 de la nappe 8 font l'angle aigu $\alpha_8$ avec le plan équatorial xx'. Ces angles $\alpha_7$, $\alpha_8$ sont disposés de part et d'autre du plan équatorial xx', chacun de ces angles étant par exemple compris entre 15° et 30°. Pour la clarté du dessin, les fils de renfort 9 ont été représentés dans chaque nappe 7, 8 plus écartés qu'ils ne le sont en réalité.

La nappe 7 est située sous la nappe 8, c'est-à-dire que cette nappe 7 est plus proche que la nappe 8 de la cavité interne 10 de l'enveloppe, cette cavité étant définie par la face interne 11 de l'enveloppe et la jante 12 sur laquelle est montée l'enveloppe 1. En d'autres termes, la distance radiale de la nappe 8 est supérieure à la distance radiale de la nappe 7, ces distances radiales, non représentées sur le dessin dans un but de simplification, étant, par définition, mesurées par rapport à l'axe de révolution yy' et dans le plan équatorial. La nappe 7 est dite "nappe inférieure" et la nappe 8 est dite "nappe supérieure". Il va de soi que la largeur de chaque nappe, mesurée le long de cette nappe, dans un plan contenant l'axe de révolution yy', peut être égale, supérieure, ou inférieure à la largeur de l'autre nappe mesurée dans les mêmes conditions. C'est ainsi qu'à la figure 1 la nappe 7 a été représentée plus large que la nappe 8.

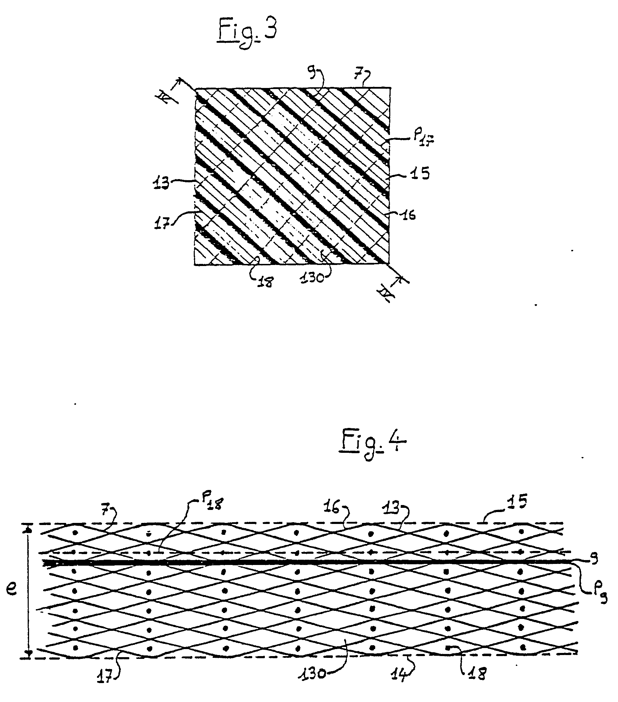

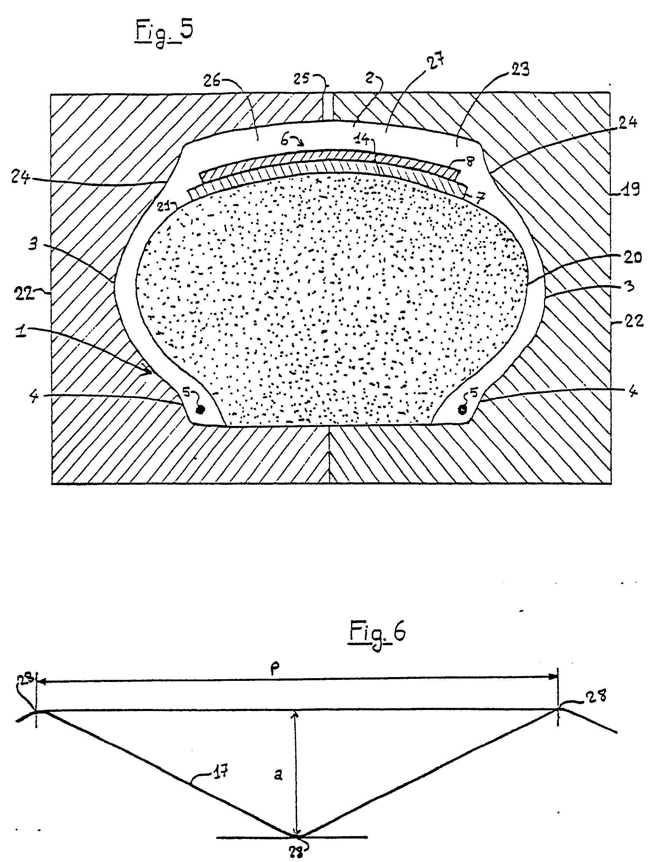

Les figures 3, 4 représentent une portion de la nappe inférieure 7. Cette nappe 7 comporte un tissu 13 avec deux faces principales 14, 15. Ces faces 14, 15 sont représentées sous forme de droites pointillées à la figure 4, ces faces étant alors planes, c'est-à-dire que le tissu 13 est représenté sur ces figures 3, 4 avant son utilisation dans le sommet 2, ce tissu 13 étant alors supposé disposé de façon à avoir une forme générale plane, la face 15 étant la face supérieure de ce tissu, les faces 14, 15 étant parallèles.

L'épaisseur "e" du tissu 13 est la distance qui sépare les faces 14, 15.

Le tissu 13 comporte un corps tridimensionnel 16. Les fils de renfort 9 de cette nappe 7 font parties du tissu 13 et sont disposés dans le corps 16 et maintenus par ce corps. Ce corps 16 est une corps tissé constitué de fils de chaîne 17 et de fils de trame 18. Le terme "fil" doit être pris dans un sens très général, c'est-à-dire que chacun des fils 9, 17, 18 peut être constitué par exemple soit d'un seul fil unitaire, soit d'un assemblage de plusieurs fils unitaires formant par exemple un câble, chaque fil unitaire pouvant être éventuellement constitué soit d'un filament unique, soit de plusieurs filaments. Chacun de ces fils 9, 17, 18 peut aussi être constitué par exemple d'un assemblage de fibres ou d'un ou plusieurs rubans. Chaque fil de chaîne 17 ondule pratiquement dans un plan $P_{17}$ perpendiculaire aux faces 14, 15, ce fil étant alternativement tangent à l'une de ces faces principales, puis à l'autre. Les fils de trame 18, par exemple rectilignes, sont disposés entre les fils de chaîne 17, pratiquement sur plusieurs plans $P_{18}$ dans l'épaisseur "e" (figure 4), ces plans étant parallèles aux faces principales 14, 15. Le nombre de ces plans $P_{18}$ est de préférence au moins égal à quatre. L'orientation moyenne des fils de chaîne 17 et l'orientation des fils de trame 18 sont pratiquement perpendiculaires, les plans $P_{17}$ étant pratiquement perpendiculaires aux plans $P_{18}$, un de ces plans $P_{18}$ étant représenté en pointillé à la figure 4.

La structure du corps 16 est dont tridimensionnelle puisque les fils 17, 18 qui le constituent sont distribués dans les trois dimensions. Ce corps 16 sert en quelque sorte d'échaffaudage pour les fils de renfort 9 et il est susceptible de garder une structure tridimensionnelle même si on enlève les fils 9 du tissu 13.

La structure du corps 16 est la même que celle décrite dans le brevet français 1 526 185. Les fils de renfort 9 maintenus par le corps 16 peuvent constituer des fils de chaîne ou des fils de trame du tissu 13. Il est possible d'autre part d'utiliser des fils de trame 18 de telle sorte qu'ils soient ondulés par exemple pour lier les fils de renfort 9 lorsque ceux-ci sont en chaîne. L'orientation des fils de trame 18 est représentée alors par leur orientation moyenne. Il faut signaler d'autre part que les fils 17 et/ou 18 peuvent être éventuellement remplacés en partie par des fils de renfort 9. Les fils de renfort 9 sont disposés de telle sorte qu'ils soient dépourvus de contact avec au moins une des faces principales 14, 15.

Dans l'exemple représenté aux figures 3, 4, ces fils de renfort 9 sont pratiquement rectilignes et disposés dans un plan $P_9$ qui est parallèle aux plans $P_{18}$ et disposé entre deux plans $P_{18}$ successifs. Chaque fil de chaîne 17 a une orientation moyenne parallèle aux fils de renfort 9, les fils de renfort 9 étant parallèles aux plans

$P_{17}$ et séparés les uns des autres, la figure 4 étant une coupe effectuée selon un plan parallèle aux plans $P_{17}$. Dans l'exemple décrit, les fils de renfort 9 sont donc dépourvus de contact avec les deux faces principales 14, 15.

La structure de la nappe supérieure 8 est analogue à la structure précédemment décrite pour la nappe inférieure 7. L'armature de renfort 6 pourrait être éventuellement constituée d'une seule nappe, les fils de renfort 9 de cette nappe décrivant alors par exemple dans l'enveloppe 1 des cercles parallèles au plan équatorial. Il va de soi d'autre part que l'armature de renfort 6 pourrait être constituée de plus de deux nappes.

Le corps 16 a pour seul rôle de maintenir les fils de renfort 9. Les fils 17, 18 constituant ce corps peuvent donc être réalisés avec des matières très diverses, minérales, métalliques ou organiques, même si leurs caractéristiques mécaniques, notamment la résistance à la traction, ne sont pas très élevées. Par exemple, chacun des fils 17, 18 est réalisé avec un polymère organique pour avoir un poids faible. Ce polymère organique est par exemple la rayonne, un polyamide aromatique ou non aromatique, un polyester, un alcool polyvinylique, une polyoléfine. Il peut être avantageux de réaliser les fils 17, 18 avec une matière compatible avec la matière avec laquelle ils sont en contact dans l'enveloppe 1, ou identique à cette matière, ces fils 17, 18 étant par exemple réalisés en polyuréthannes si l'enveloppe 1 est obtenue par coulée de matières susceptibles de réagir entre elles pour donner des polyuréthannes. Il peut aussi être avantageux de réaliser les fils 17, 18 avec une matière thermoplastique pour faciliter la découpe du corps 16 et/ou la soudure des extrémités du corps 16 par des moyens thermiques.

Les fils de renfort 9 doivent, eux, être capables de supporter les contraintes auxquelles est soumis le sommet. Ils doivent donc avoir des caractéristiques mécaniques élevées, en particulier la résistance à la traction de ces fils doit être élevée. Ces fils de renfort 9 sont réalisés par exemple avec une matière métallique, notamment l'acier, une matière minérale, notamment le verre, ou une matière organique, par exemple pour diminuer le poids et limiter les risques de corrosion. Cette matière organique peut être par exemple la rayonne, un polyamide aromatique ou non aromatique, un polyester, un alcool polyvinylique. Il va de soi que les fils 9, 17, 18 peuvent être réalisés avec des matières identiques ou différentes, et que chacun de ces fils peut comporter plusieurs matières avec éventuellement des adjuvants divers, notamment des charges.

Les fils 17, 18 constituant le corps 16 ont de préférence une section droite dont la surface a une aire plus faible que celle de la surface de la section droite des fils de renfort 9 de telle sorte que la contribution de ces fils 17, 18 au renfort de la nappe soit la plus faible possible. Avantageusement, les fils 17, 18 ont une section droite dont la surface a une aire au plus égale au quart de celle de la surface de la section droite des fils de renfort 9. Dans ces conditions, lorsque les fils 9, 17, 18 ont une forme cylindrique à section circulaire, le diamètre des fils 17, 18 est de préférence inférieur au diamètre des fils de renfort 9, et, avantageusement, le diamètre des fils 17, 18 est au plus égal à la moitié du diamètre des fils de renfort 9. Lorsque les fils de renfort 9 d'une même nappe ont des sections différents, par exemple des diamètres différents, la comparaison des sections entre les fils 17, 18 et les fils de renfort 9 doit se faire en considérant les fils de renfort 9 qui ont la plus faible section, par exemple le diamètre le plus petit. Dans la pratique, il est cependant souvent préférable de prendre une section identique pour tous les fils de renfort 9 d'une même nappe, ou éventuellement de toutes les nappes de renfort entrant dans la constitution de l'enveloppe 1. Pour ce qui est des fils 17, 18, il va de soi que leurs sections peuvent être identiques ou différentes.

A titre d'exemple, les caractéristiques de l'enveloppe 1, avec ses nappes de renfort 7, 8 conformes à l'inventipn sont les suivantes.

L'enveloppe 1 a pour dimension 135-13. Elle est réalisée par coulée de matières fluides ou pâteuses susceptibles de donner par réaction un polyuréthanne, cette réalisation se faisant selon un procédé en une seule étape.

Ce procédé utilise un moule 19 représenté en partie à la figure 5. On dispose l'armature de renfort 6 sur le noyau 20 du moule 19, de telle sorte que la face inférieure 14 de la nappe 7 soit directement au contact de la face convexe 21 du noyau 20, la nappe supérieure 8 reposant ainsi sur la nappe inférieure 7. On ferme ensuite les deux coquilles 22 du moule 19 autour du noyau 20 de façon à obtenir une cavité 23 délimitée par la face convexe 21 du noyau 20 et par les faces concaves 24 des coquilles 22. L'armature de renfort 6 se trouve ainsi disposée dans cette cavité 23 de même que les tringles 5 que l'on a préalablement fixées dans le moule 19 par des moyens connus avant de refermer les coquilles 22.

Cette cavité 23 a la même forme que l'enveloppe 1 terminée. On fait alors arriver dans la cavité 23, par le conduit 25, un mélange qui forme dans le moule un polyuréthanne 26, de façon connue en soi. Par définition, les vides des tissus 13 sont les vides entre les fils 9, 17, 18 de ces tissus et pratiquement tous ces vides 130 (figure 4) sont susceptibles d'être imprégnés de matière 26 pour les nappes 7, 8. Cette alimentation se fait par exemple sous vide, mais d'autres techniques de réalisation sont possibles, par exemple des techniques de centrifugation. On obtient ainsi l'ensemble de l'enveloppe 1 par cette coulée.

Dans un but de simplification, les autres parties du moule 19, de même que les moyens permettant de fixer les tringles 5 dans le moule, n'ont pas été représentés sur le dessin. La face inférieure 14 de la nappe 7 constitue donc en partie la face interne 11 de l'enveloppe 1, et la matière 26 qui recouvre l'armature de renfort 6 constitue la bande de roulement 27 de l'enveloppe 1.

Le corps tridimensionnel 16 de chaque nappe 7, 8 a une épaisseur "e" de 2 mm. Les fils de chaîne 17, et les fils de trame 18 ont chacun une structure de câble constitué de deux surtors de titre 10 tex surtordus à 1 000 tours par mètre en S, assemblés et retordus à 1 000 tours par mètre en Z.

La matière de ces câbles 17, 18 est un polyester thermoplastique stabilisé à 130°C. Pour chacun de ces câbles, la force à la rupture est de 7 N, l'allongement à la rupture de 26% et le diamètre de 0,15 mm.

Ce corps 16 comporte 735 câbles de chaîne 17 pour 100 mm et 443 câbles de trame 18 pour 100 mm. Le décompte des câbles 17, 18 se fait sur toute l'épaisseur "e" dans un plan perpendiculaire aux faces principales 14, 15, ce plan étant soit orienté dans la direction moyenne des câbles de trame 18, pour le décompte des câbles de chaîne 17, soit orienté dans la direction moyenne des câbles de chaîne 17, pour le décompte des câbles de trame 18, la distance de 100 mm précitée étant mesurée suivant l'intersection du plan considéré et d'une face principale 14, 15. L'ondulation de chaque câble de chaîne 17 se caractérise par un taux d'ondulation $T=a/p$, "a" étant l'amplitude de l'ondulation mesurée entre deux crêtes successives et "p" étant la longueur d'onde de cette ondulation; la figure 6 représente à titre d'exemple l'amplitude "a" et la longueur d'onde "p" pour un câble de chaîne 17 de la nappe inférieure 7, deux crêtes successives de l'ondulation étant référencées 28. Les câbles de chaîne 17 ont un taux T de l'ordre de 12% dans l'exemple décrit, mais ce taux T peut varier dans de très larges limites. La forme de cette ondulation peut être très variable, elle peut par exemple comporter des segments pratiquement rectilignes. Il existe 7 plans $P_{18}$ de câbles de trame 18 dans l'épaisseur "e".

Les fils de renfort 9 ont chacun une structure de câble constitué de deux surtors de titre 167 tex surtordus à 320 tours par mètre S assemblés et retordus à 320 tours par mètre en Z.

La matière de ces câbles 9 est un polyamide aromatique. Pour chacun de ces câbles, la force à la rupture est de 54 daN, l'allongement à la rupture de 3,4% et le diamètre de 0,7 mm. Le plan $P_9$ où se trouvent les câbles de renfort 9 dans chaque nappe 7, 8 est situé par exemple au quart de l'épaisseur "e", ce plan $P_9$ étant plus proche de la face supérieure 15 que de la face inférieure 14. Le nombre de ces câbles de renfort 9 est de 100 pour une distance de 100 mm mesurée perpendiculairement à l'orientation de ces fils 9.

On mesure d'une part la rigidité du tissu 13, avec le corps 16 et les câbles de renfort 9, et d'autre part la rigidité du corps 16 seul. Chacune de ces rigidités est mesurée d'une part selon l'orientation moyenne des câbles de chaîne 17, c'est-à-dire selon l'orientation des câbles de renfort 9, on l'appelle alors "rigidité chaîne", et d'autre part selon l'orientation des câbles de trame 18, on l'appelle alors "rigidité trame". Dans chaque cas, la rigidité correspond au rapport $F/L\varepsilon$, F étant la force nécessaire pour obtenir un allongement relatif $\varepsilon$ fixé qui est égal dans tous les cas à 2%, et L étant la largeur du tissu 13 ou du corps 16 soumis à cette mesure, cette largeur étant mesurée le long d'une face principale 14, 15 et perpendiculairement à l'orientation où s'exerce la force F. Cette largeur est par exemple égale à 100 mm, le rapport $F/L\varepsilon$ étant pratiquement indépendant de la valeur L lorsque les nombres de câbles 9, 17, 18 correspondant à cette valeur L sont grands. Les valeurs de rigidités sont les suivantes: tissu 13: rigidité chaîne: 466 kN.m$^{-1}$; rigidité trame: 53 kN.m$^{-1}$. Corps 16: rigidité chaîne: 8,4 kN.m$^{-1}$; rigidité trame: 44 kN.m$^{-1}$.

De préférence, le rapport entre, d'une part, la rigidité du tissu 13 mesurée selon l'orientation des fils de renfort 9 et, d'autre part, la rigidité du corps 16 seul mesurée selon cette même orientation est au moins égal à 10 et avantageusement au moins égal à 40, et ceci quelle que soit la structure des fils 9, 17, 18, de telle sorte que l'effet de renfort ne soit pratiquement dû qu'aux fils de renfort 9. C'est ainsi que dans l'exemple cité, le rapport rigidité chaîne du tissu 13/rigidité chaîne du corps 16 est pratiquement égal à 55.

Toutes les caractéristiques géométriques des câbles 9, 17, 18 précédemment mentionnées correspondent à des nappes avant incorporation dans l'enveloppe 1, ces nappes étant alors disposées de façon que les faces principales 14, 15 soient planes, comme précédemment décrit.

Chaque nappe 7, 8 est obtenue par exemple en découpant un ruban dans une bande de tissu 13. Les extrémités de ce ruban sont ensuite assemblées bout à bout de façon à obtenir un anneau que l'on dispose dans le moule, les angles $a_7$, $a_8$ étant obtenus grâce à la découpe des rubans. Lors de l'assemblage bout à bout des extrémités du ruban, il est important que deux câbles 9 successifs soient séparés par une distance pratiquement constante, sur tout l'anneau obtenu, y compris au niveau de l'aboutage qui peut être obtenue par soudure, sand que cela soit nécessaire.

Il va de soi que l'assemblage des extrémités des rubans peut être effectué directement dans le moule.

Lorsque les nappes 7, 8 sont incorporées dans l'enveloppe 1, chacune de ces nappes présente les caractéristiques suivantes au voisinage du plan équatorial:

—les câbles de chaîne 17 ondulent dans des plans pratiquement perpendiculaire aux face principales 14, 15, la face 15 de chaque nappe étant par exemple située au-dessus de la face 14 de cette nappe, ces plans faisant avec le plan équatorial le même angle $a_7$, $a_8$ que les fils de renfort 9 de cette nappe;

—les câbles de trame 18 sont pratiquement disposés dans des cylindres d'axe de révolution yy', entre les cylindres correspondants aux faces principales 14, 15, ces câbles de trame 18 étant pratiquement perpendiculaires aux plans où ondulent les câbles de chaîne 17;

—les câbles de renfort 9 sont pratiquement disposés dans un cylindre d'axe de révolution yy', ce cylindre étant disposé entre deux cylindres de câbles de trame 18.

Ces dispositions qui ne sont pas représentées sur le dessin dans un but de simplification, sont dues à l'assemblage bout à bout des extrémités de chaque ruban du tissu 13 qui a été précédemment décrit avec une forme générale plane, aux figures 3, 4.

L'invention présente les avantages décrits ci-dessous.

1) Chaque nappe 7, 8 est très facile à disposer dans le moule car il suffit de la poser par exemple sur le noyau 20. Le corps tridimensionnel 16 de chaque nappe garantit un positionnement exact dans l'espace des fils de renfort 9, à l'intérieur de l'enveloppe 1, car il garantit:

—un positionnement exact des fils de renfort 9 les uns par rapport aux autres;

—un positionnement exact du plan de renfort $P_9$ par rapport à la face 21 du noyau 20, ou par rapport à toute autre partie du moule avec laquelle le corps 16 est en contact.

2) Le positionnement exact des fils de renfort 9 permet la réalisation d'enveloppes de pneumatiques ayant une qualité de fabrication très régulière, pratiquement sans risque de détérioration due à des déplacements de ces fils de renfort en cours de fabrication.

3) Etant donné que pour chaque nappe 7, 8 le caps 16 maintenant les fils de renfort 9 a une structure tridimensionnelle avec un grand nombre de fils 17, 18, ce corps n'introduit pratiquement aucune hétérogénéité dans l'enveloppe 1. Cette enveloppe possède alors une symétrie de révolution pratiquement parfaite, sans que le corps 16 provoque de phénomènes vibratoires nocifs. Il existe de plus un très bon collage entre l'armature de renfort 6 et la matière avec laquelle elle est en contact, de telle sorte que cette enveloppe se caractérise par un confort et une durée de vie satisfaisants.

4) Les nappes 7, 8 sont faciles à réaliser par simple tissage, les fils de renfort 9 pouvant être avantageusement incorporés dans le tissu 13 lors de la même opération de tissage que les fils 17, 18.

5) Les nappes 7, 8 peuvent être légères, en prenant par exemple pour tous les fils 9, 17, 18 des polymères organiques qui présentent en outre l'avantage de limiter les risques de corrosion.

La perméabilité du tissu 13 est de préférence choisie de telle sorte qu'elle permette une migration rapide du mélange formant la matière 26 dans les vides de ce tissu, lors de la réalisation de l'enveloppe 1. Dans ce but, la perméabilité du tissu est de préférence au moins égale à $10^{-11} m^2 . Pa^{-1} . s^{-1}$, cette perméabilité variant avantageusement de 500 à $1\,000 . 10^{-11}\ m^2 . Pa^{-1} . s^{-1}$, ces chiffres étant déterminés pour un fluide dont la viscosité est de 1 Pa.s. Cette perméabilité est obtenue avec un tissu 13 dont la porosité est au moins égale à 50%, cette porosité variant de préférence de 70 à 90%. Cette porosité, déterminée par le calcul, est égale au rapport v/V, "v" étant le volume vide du tissu et V le volume total du tissu, c'est-à-dire la somme du volume vide "v" et du volume occupé par les fils 9, 17, 18.

La perméabilité et la porosité du tissu 13 sont mesurées ou calculées lorsque ce tissu est disposé de façon à avoir une forme générale plane. Ces chiffres varient peu lors de l'utilisation du tissu 13 pour réaliser l'enveloppe 1, c'est-à-dire lorsque ce tissu 13 n'est plus plan.

Lorsque le tissu 13 comporte un ou plusieurs fils de renfort 9 monofilamentaires, il peut être avantageux de réaliser le tissu 13 de telle sorte que ces fils monofilamentaires ondulent légèrement, par exemple dans le plan $P_9$, le taux d'ondulation T de ces fils étant par exemple inférieur à 10%. Cette réalisation permet d'améliorer la résistance à la fatigue de ces fils dans l'enveloppe 1. L'orientation de chaque fil ondulé est représentée alors par son orientation moyenne, lorsque le tissu 13 est disposé de façon à avoir une forme générale plane.

L'invention couvre les cas où au moins une nappe 7, 8 est obtenue directement par tissage, sans qu'il soit nécessaire de découper le tissu 13 pour obtenir les angles $\alpha_7$, $\alpha_8$ dans l'enveloppe 1. Tel est le cas par exemple dans les trois réalisations suivantes, lorsque le tissu 13 est disposé de façon à avoir une forme générale plane.

1) Le tissu 13 est réalisé de telle sorte que les fils de chaîne 17 aient une orientation moyenne parallèle aux côtés de la nappe, les fils de renfort 9 formant dans le tissu des fils de trame dont l'orientation moyenne est parallèle à celle des fils de trame 18 et fait avec l'orientation moyenne des fils de chaîne 17 un angle non nul différent de 90°.

2) Les fils de renfort 9 forment dans le tissu des fils de trame dont l'orientation moyenne est parallèle à celle des fils de trame 18 et perpendiculaire aux côtés de la nappe qui sont parallèles à l'orientation moyenne des fils de chaîne 17.

3) Les fils de renfort 9 forment dans le tissu des fils de chaîne dont l'orientation moyenne est parallèle à celle des fils de chaîne 17 et aux côtés de la nappe.

Dans ces trois réalisations les nappes sont directement obtenues sous forme d'un ruban de tissu 13 dont il suffit d'abouter les extrémités. L'angle des fils de renfort 9 avec le plan équatorial de l'enveloppe 1 est obtenu directement par la position des fils de renfort 9 dans le ruban 13, sans découpe, cet angle étant:

—compris entre 0° et 90° dans la première réalisation;

—égal à 90° dans la deuxième réalisation;

—égal à 0° dans la troisième réalisation.

Le tissage peut même être effectué de telle sorte que le tissu 13 de la nappe conforme à l'invention soit obtenu directement sous forme d'un anneau, d'un cylindre, aplati ou non, ou de toute forme galbée pouvant éventuellement correspondre à la forme de la nappe lorsqu'elle est disposée dans l'enveloppe.

L'invention couvre aussi les cas de réalisation où le tissu 13 de la nappe conforme à l'invention comporte des fils de renfort 9 disposés sur plusieurs niveaux dans son épaisseur "e", par exemple sur plusieurs plans $P_9$, la direction des fils 9 d'un plan $P_9$ étant notamment croisée avec la direction des fils 9 du ou des autres plans voisins. Cette technique permet par exemple de réaliser l'ensemble de l'armature 6 avec une seule nappe. Dans cette réalisation, il peut être avantageux d'obtenir le tissu 13 de sorte que les fils de renfort 9, dans au moins un de ces plans $P_9$, remplacent soit des fils de chaîne 17, soit des fils de trame 18, pour diminuer le poids et augmenter la porosité et la perméabilité. Il va de soi que ces plans $P_9$ peuvent éventuellement avoir des largeurs différentes dans une même nappe. La description précédente concernant l'emploi de plusieurs plans de fils de renfort 9 suppose ici encore que le tissu 13 soit disposé de façon à avoir une forme générale plane.

L'invention s'applique aussi aux cas où le tissu 13 comporte des fils de renfort 9 disposés de telle sorte qu'ils aient plusieurs orientations sans que ces fils soient disposés sur des plans.

Tel est le cas par exemple lorsque les fils 9 correspondant à chaque direction sont disposés de façon pratiquement homogène dans toute la masse du tissu 13. Dans les cas de réalisation précédemment décrits, chaque orientation correspond soit à l'orientation d'un fil de renfort 9, s'il est rectiligne, soit à l'orientation moyenne d'un fil de renfort 9, s'il est ondulé, le tissu 13, ici encore, étant disposé de façon à avoir une forme générale plane. Lorsque le tissu 13 comporte des fils de renfort 9 avec plusieurs orientations, de préférence, pour chacune de ces orientations, le rapport entre, d'une part, la rigidité du tissu 13 et, d'autre part, la rigidité du corps 16 seul est au moins égal à 10 et avantageusement au moins égal à 40, ces rigidités étant mesurées selon cette orientation donnee, de façon analogue à ce qui a été décrit précédemment, c'est-à-dire en particulier pour un allongement relatif $\varepsilon$ de 2%, mais dans cette mesure le tissu 13 ne comporte que les fils de renfort 9 qui ont l'orientation étudiée, les autres fils de renfort 9 étant enlevés. Dans tous les cas précités il est préférable que les fils de renfort 9 soient séparés les uns des autres par des fils 17, 18 du corps de telle sorte que ces fils de renfort soient dépourvus de contact entre eux. On limite ainsi les phénomènes d'abrasion de ces fils de renfort.

Les fils de renfort 9 d'une même nappe peuvent être constitués de matières différentes et ceci qu'il y ait une ou plusieurs orientations pour ces fils, c'est ainsi par exemple que les fils de renfort 9 correspondant à une orientation peuvent être métalliques, et que les fils de renfort 9 correspondant à une autre orientation peuvent être réalisés avec une matière organique, notamment un polyamide aromatique.

Les nappes conformes à l'invention peuvent être utilisées pour des enveloppes de pneumatiques dont la technique de réalisation est différente de la coulée. C'est ainsi par exemple que ces nappes peuvent être utilisées pour réaliser des eveloppes de pneumatiques par confection sur un tambour notamment en disposent les nappes inférieures directement sur le tambour pour qu'elle constituent au moins une partie d'une face des enveloppes, les fils de renfort étant dépourvus de contact avec cette face. Dans ce cas, il peut être avantageux d' imprégner les nappes avec une gomme avant de les incorporer dans les enveloppes.

Les nappes conformes à l'invention peuvent être combinées avec des nappes de renfort classiques disposées par exemple dans le sommet des enveloppes sur les nappes conformes à l'invention.

L'invention a été particulièrement décrite précédemment pour la réalisation d'une armature de sommet, cependant les nappes comformes à l'invention peuvent êre utilisées pour renforcer d'autres parties d'une enveloppe de pneumatique, par exemple les bourrelets.

## Revendications

1. Nappe de renfort (7, 8) destinée à être utilisée dans le sommet (2) d'une enveloppe (1) de pneumatique, et constituée au moins en partie par un tissu (13) dont les propriétés sont les suivantes lorsque ce tissu est disposé de façon à avoir une forme générale plane avec deux faces principales (14, 15) planes et parallèles;

a) il comporte un corps tridimensionnel (16) et des fils de renfort (9) disposés dans ce corps (16) et maintenus par ce corps;

b) pratiquement tous les vides du tissu (13) sont susceptibles d'être imprégnés d'au moins une matière entrant dans la constitution de l'enveloppe;

c) le corps (16) comporte des fils de chaîne (17), chacun de ces fils de chaîne ondulant pratiquement dans un plan (P17) perpendiculaire aux faces principales (14, 15) du tissu (13), en étant alternativement tangent à l'une des faces, puis à l'autre;

d) le corps (16) comporte des fils de trame (18) disposés entre les fils de chaîne (17);

e) les fils de renfort (9) sont pratiquement disposés dans un plan (P9), les fils de renfort ayant la même orientation, ce plan (P9) étant parallèle aux plans (P18) des fils de trame (18);

f) les fils de renfort (9) sont dépourvus de contact avec au moins une des faces principales (14, 15) du tissu (13);

g) les fils de renfort (9) sont séparés les uns des autres par des fils (17, 18) du corps (16) de telle sorte que ces fils de renfort (9) soient dépourvus de contact entre eux; caractérisée en ce que

h) le corps (16) est susceptible de garder une structure tridimensionnelle même si on enlève du tissu (13) les fils de renfort (9);

i) les fils de trame (18) sont disposés pratiquement sur au moins quatre plans (P18) dans l'épaisseur (9) du tissu, ces plans (P18) étant parallèles aux faces principales (14, 15) du tissu;

j) les fils (17, 18) du corps (16) ont une section droite dont la surface a une aire au plus égale au quart de celle de la surface de la section droite des fils de renfort (9);

k) le rapport entre, d'une part, la rigidité du tissu (13) mesurée selon l'orientation des fils de renfort (9), et, d'autre part, la rigidité du corps (16) seul mesurée selon cette orientation, est au moins égal à 10, ces mesures de rigidité étant effectuées pour un allongement relatif de 2%;

l) la porosité du tissu (13) est au moins égale à 50%;

m) la perméabilité du tissu (13) est au moins égale à $10^{-11}$ m².Pa$^{-1}$.s$^{-1}$ pour un fluide dont la viscosité est de 1 Pa.s.

2. Nappe selon la revendication 1, caractérisée en ce que les fils de renfort (9) constituent des fils de chaîne et/ou des fils de trame du tissu (13).

3. Nappe selon la revendication 2 caractérisée en ce que les fils de renfort remplacent des fils de chaîne ou des fils de trame du corps (16).

4. Nappe selon l'une quelconque des revendications 1 à 3 caractérisée en ce que le corps (16) est constitué au moins en partie de fils de chaîne et de fils de trame, de telle sorte que les fils de chaîne aient une orientation moyenne parallèle aux côtés de la nappe (7, 8), les fils de renfort formant dans le tissu (13) des fils de trame dont l'orientation est parallèle à celle des fils de trame du corps et fait avec l'orientation moyenne des fils de chaîne un angle non nul différent de 90°.

5. Nappe selon l'une quelconque des revendications 1 à 3 caractérisée en ce que le corps (16) est constituté au moins en partie de fils de chaîne et de fils de trame de telle sorte que les fils de renfort forment dans le tissu (13) des fils de trame dont l'orientation est parallèle à celle des fils de trame du corps at perpendiculaire aux côtés de la nappe (7, 8) qui sont parallèles à l'orientation moyenne des fils de chaîne du corps (16).

6. Nappe selon l'une quelconque des revendications 1 à 3 caractérisée en ce que le corps (16) est constitué au moins en partie de fils de chaîne et de fils de trame de telle sorte que les fils de renfort forment dans le tissu (13) des fils de chaîne dont l'orientation est parallèle à l'orientation moyenne des fils de chaîne du corps, et aux côtés de la nappe (7, 8).

7. Nappe selon l'une quelconque des revendications 1 à 6 caractérisée en ce que les fils de renfort (9) d'une part et les fils (17, 18) du corps (16), d'autre part sont réalisés avec des matières différentes.

8. Nappe selon l'une quelconque des revendications 1 à 7 caractérisée en ce que les fils de renfort (9) sont réalisés avec un polyamide aromatique.

9. Nappe selon l'une quelconque des revendications 1 à 8 caractérisée en ce que le corps (16) est réalisé au moins en partie avec une matière thermoplastique.

10. Nappe selon l'une quelconque des revendications 1 à 9 caractérisé en ce que la perméabilité du tissu (13) varie de 500 à 1 000.10$^{-11}$ m².Pa$^{-1}$.s$^{-1}$ pour un fluide dont la viscosité est de 1 Pa.s.

11. Nappe selon l'une quelconque des revendications 1 à 10 caractérisée en ce que la porosité du tissu (13) varie de 70% à 90%.

12. Nappe selon l'une quelconque des revendications 1 à 11 caractérisée en ce que le rapport entre la rigidité du tissu (13) et la rigidité du corps (16) seul est au moins égal à 40.

13. Nappe selon l'une quelconque des revendications 1 à 12 caractérisée en ce que les fils de renfort (9) sont monofilamentaires et ondulent légèrement, le taux d'ondulation de ces fils étant inférieur à 10%.

14. Nappe selon l'une quelconque des revendications 1 à 13 caractérisée en ce qu'elle est imprégnée d'au moins une matière entrant dans la constitution de l'enveloppe (1) de pneumatique où elle est destinée à être utilisée.

15. Enveloppe (1) de pneumatique comportant au moins une nappe de renfort (7, 8) conforme à l'une quelconque des revendications 1 à 14.

16. Enveloppe (1) de pneumatique selon la revendication 15 caractérisée en ce que, au voisinage du plan équatorial de l'enveloppe, les fils de renfort (9) sont pratiquement disposés dans un ou plusieurs cylindres dont l'axe de révolution est l'axe de révolution de l'enveloppe.

17. Enveloppe (1) de pneumatique selon l'une quelconque des revendications 15 ou 16 caractérisée en ce que le corps (16) est constitué au moins en partie de fils de chaîne (17) et de fils de trame (18) de telle sorte que, au voisinage du plan équatorial de l'enveloppe, les fils de trame (18) du corps (16) sont pratiquement disposés dans plusieurs cylindres dont l'axe de révolution est l'axe de révolution de l'enveloppe (1).

18. Enveloppe (1) de pneumatique selon l'une quelconque des revendications 15 à 17 caractérisée en ce qu'au moins une nappe de renfort (7, 8) constitue au moins en partie une face de l'enveloppe, les fils de renfort (9) étant dépourvus de contact avec cette face.

19. Procédé consistant à fabriquer une enveloppe (1) de pneumatique conforme à l'une quelconque des revendications 15 à 18 caractérisé en ce que, lors de cette fabrication, on dispose au moins une nappe de renfort (7, 8) conformé à l'une quelconque des revendication 1 à 14 directement sur une partie d'un moule de coulée ou sur un tambour de confection, les fils de renfort (9) étant dépourvus de contact avec la face principale (14, 15) du tissu (13) qui se trouve au contact du moule ou du tambour de confection.

## Patentansprüche

1. Verstärkungslage (7, 8), zur Verwendung im Scheitel (2) eines Luftreifens (1), die zumindest zum Teil aus einem Gewebe (13) besteht, welches die folgenden Eigenschaften aufweist, wenn es in einer im allgemeinen ebenen Form vorliegt und zwei Hauptseiten (14, 15), die eben und parallel sind, hat:

a) es weist einen dreidimensionalen Körper (16) und darin angeordnete, von ihm gehaltene Verstärkungsfäden (9) auf;

b) praktisch der gesamte Leerraum des Gewebes (13) ist in der Lage von zumindest einem Material, welches bei der Herstellung des Luftreifens verwendet wird, ausgefüllt zu werden;

c) der Körper (16) weist Kettfäden (17) auf, von denen jeder praktisch in einer Ebene (P17) gewellt ist, die rechtwinkelig auf die Hauptseiten (14, 15) des Gewebes (13) steht und abwechselnd eine dieser Seiten tangiert, anschließend die andere;

d) der Körper (16) weist Schußfäden (18) auf, die zwischen den Kettfäden (17) angeordnet sind;

e) die Verstärkungsfäden (9) sind praktisch in einer Ebene (P9) angeordnet, die Verstärkungsfäden weisen dieselbe Orientierung auf, die Ebene (P9) ist parallel zu den Ebenen (P18) der Schußfäden (18);

f) die Verstärkungsfäden (9) haben mit zumindest einer der Hauptseiten (14, 15) des Gewebes (13) keinen Kontakt;

g) die Verstärkungsfäden (9) sind voneinander durch Fäden (17, 18) des Körpers (16) so getrennt, daß diese Verstärkungsfäden (9) untereinander keinen Kontakt haben;

dadurch gekennzeichnet, daß:

h) der Körper (16) in der Lage ist, eine dreidimensionale Struktur auch aufrecht zu erhalten, wenn man dem Gewebe (13) die Verstärkungsfäden (9) entzieht;

i) die Schußfäden (18) praktisch in zumindest vier Ebenen (P18) innerhalb der Dicke "e" des Gewebes angeordnet sind, wobei diese Ebenen (P18) parallel zu den Hauptseiten (14, 15) des Geweben liegen;

j) die Fäden (17, 18) des Körpers (16) einen Querschnitt aufweisen, dessen Fläche hochstens gleich ist einem Viertel der Querschnittsfläche der Verstärkungsfäden (9);

k) das Verhältnis zwischen der Steifigkeit des Gewebes (13), gemessen in Richtung der Orientation der Verstärkungsfäden (9) einerseits und der Steifigkeit des Körpers (16) allein, gemessen in der gleichen Richtung andererseits zumindest gleich 10 ist, diese Messungen werden für eine relative Dehnung von 2% ausgeführt;

l) die Porosität des Gewebes (13) zumindest gleich 50% beträgt;

m) die Durchlässigkeit des Gewebes (13) zumindest gleich $10^{-11}$ m².Pa$^{-1}$.s$^{-1}$ für ein Fluid, dessen Viskosität eine Pascal-Sekunde ist, beträgt.

2. Lage nach Anspruch 1, dadurch gekennzeichnet, daß die Verstärkungsfäden (9) Kettfäden und/oder Schußfäden des Gewebes (13) bilden.

3. Lage nach Anspruch 2, dadurch gekennzeichnet, daß die Verstärkungsfäden (9) Kettfäden oder Schußfäden des Körpers (16) ersetzen.

4. Lage nach einem der Ansprüche 1 bis 3, dadurch gekennzeichnet, daß der Körper (16) zumindest zum Teil so aus Kett- und Schußfäden besteht, daß jeder Kettfaden eine mittlere Orientierung parallel zu den Seiten der Lage (7, 8) aufweist, und daß die Verstärkungsfäden im Gewebe (13) Schußfäden bilden, deren Orientierung parallel zu der der Schußfäden des Körpers ist, und mit der mittleren Richtung der Kettfäden einen Winkel aufweist, der nicht Null und nicht gleich 900 ist.

5. Lage nach einem der Ansprüche 1 bis 3, dadurch gekennzeichnet, daß der Körper (16) zumindest zum Teil so aus Kett- und Schußfäden besteht, daß die Verstärkungsfäden im Gewebe (13) Schußfäden bilden, die eine Orientierung aufweisen, die parallel zu der der Schußfäden die Körpers und rechtwinkelig auf die Seiten der Lage (7, 8) ist, die wiederum parallel zur mittleren Orientierung der Kettfäden des Körpers (16) sind.

6. Lage nach einem der Ansprüche 1 bis 3, dadurch gekennzeichnet, daß der Körper (16) zumindest zum Teil so aus Kett- und Schußfäden besteht, daß die Verstärkungsfäden im Gewebe (13) Kettfäden bilden, die eine Orientierung parallel zur mittleren Orientierung der Kettfäden des Körpers und zu den Seiten der Lage (7, 8) haben.

7. Lage nach einem der Ansprüche 1 bis 6, dadurch gekennzeichnet, daß die Verstärkungsfäden (9) einerseits und die Fäden (17, 18) des Körpers (16) andererseits aus unterschiedlichen Materialien bestehen.

8. Lage nach einem der Ansprüche 1 bis 7, dadurch gekennzeichnet, daß die Verstärkungsfäden (9) aus aromatischem Polyamid bestehen.

9. Lage nach einem der Ansprüche 1 bis 8, dadurch gekennzeichnet, daß der Körper (16) zumindest zum Teil aus thermoplastischem Material besteht.

10. Lage nach einem der Ansprüche 1 bis 9, dadurch gekennzeichnet, daß die Durchlässigkeit des Gewebes (13) zwischen 500 und $1000.10^{-11}$ m².Pa$^{-1}$.s$^{-1}$ für ein Fluid, dessen Viskosität eine Pa.s. ist, beträgt.

11. Lage nach einem der Ansprüche 1 bis 10, dadurch gekennzeichnet, daß die Porosität des Gewebes (13) zwischen 70 und 90% beträgt.

12. Lage nach einem der Ansprüche 1 bis 11, dadurch gekennzeichnet, daß das Verhältnis zwischen der Steifigkeit des Gewebes (13) un der Steifigkeit des Körpers (16) allein zumindest gleich 40 ist.

13. Lage nach einem der Ansprüche 1 bis 12, dadurch gekennzeichnet, daß die Verstärkungsfäden (9) monofilar und leicht gewellt sind, wobei der Ondulationsindex dieser Fäden unter 10% liegt.

14. Lage nach einem der Ansprüche 1 bis 13, dadurch gekennzeichnet, daß sie mit zumindest einem Material imprägniert ist, welches bei der Herstellung des Luftreifens (1), in den sie eingebracht wird, verwendet wird.

15. Luftreifen (1), der zumindest eine Verstärkungslage (7, 8) entsprechend einem der Ansprüche 1 bis 14 aufweist.

16. Luftreifen (1) nach Anspruch (15), dadurch gekennzeichnet, daß in Nachbarschaft der Aquatorialebene des Luftreifens die Verstärkungsfäden (9) praktisch in einem oder mehreren Zylindern angeordnet sind, deren Drehachse die Drehachse des Luftreifens ist.

17. Luftreifen (1) nach einem der Ansprüche 15 oder 16, dadurch gekennzeichnet, daß der Körper (16) zumindest zum Teil so aus Kettfäden (17) und Schußfäden (18) besteht, daß in Nachbarschaft der Äquatorialebene des Luftreifens die Schußfäden (18) des Körpers (16) praktisch in mehreren Zylindern angeordnet sind, deren Drehachse die Drehachse des Luftreifens (1) ist.

18. Luftreifen (1) nach einem der Ansprüche 15 bis 17, dadurch gekennzeichnet, daß zumindest eine Verstärkungslage (7, 8) zumindest einen Teil einer Luftreifenfläche bildet, wobei die Verstärkungsfäden (9) keinerlie Kontakt mit dieser Fläche aufweisen.

19. Verfahren zur Herstellung eines Luftreifens (1), entsprechend einem der Ansprüche 15 bis 18, dadurch gekennzeichnet, daß während der Herstellung zumindest eine Verstärkungslage (7, 8), die einem der Ansprüche 1 bis 14 entspricht, direkt auf einen Teil einer Form oder einer Trommel zur Herstellung des Luftreifens aufgebracht wird, wobei die Verstärkungsfäden (9) keinerlei Kontakt mit der Hauptfläche (14, 15) des Gewebes (13) haben die sich in Kontakt mit der Form oder der Konfektioniertrommel befindet.

## Claims

1. A reinforcement ply (7, 8) intended to be used in the crown (2) of a tire (1), and formed at least in part of a fabric (13), the properties of which are as follows when this fabric is arranged in such a manner as to have a generally flat shape, having two principal flat and parallel faces (14, 15);

a) it comprises a three-dimensional body (16) and reinforcement threads (9) arranged in this body (16) and held by this body;

b) practically all the voids in the fabric (13) are capable of being impregnated with at least one material which forms part of the structure of the tire;

c) the body (16) comprises warp threads (17), each of these warp threads undulating practically in a plane (P17) perpendicular to the principal faces (14, 15) of the fabric (13), and being alternately tangent to one of the faces and then to the other face;

d) the body (16) comprises woof threads (18) arranged between the warp threads (17);

e) the reinforcement threads (9) are arranged practically in one plane (P9), the reinforcement threads having the same orientation, this plane (P9) being parallel to the planes (P18) of the woof threads (18);

f) the reinforcement threads (9) are without contact with at least one of the principal faces (14, 15) of the fabric (13);

g) the reinforcement threads (9) are separated from each other by threads (17, 18) of the body (16) in such a manner that these reinforcement threads (9) are without contact with each other; characterised in that:

h) the body (16) is capable of retaining a three-dimensional structure even if the reinforcement threads (9) are removed from the fabric (13);

i) the woof threads (18) are arranged practically in at least four planes (P18) within the thickness (e) of the fabric, these planes (P18) being parallel to the principal faces (14, 15) of the fabric;

j) the threads (17, 18) of the body (16) have a cross section whose surface has an area at most equal to one quarter of the area of the surface of the cross section of the reinforcement threads (9);

k) the ratio between the rigidity of the fabric (13) measured according to the orientation of the reinforcement threads (9) on the one hand, and the rigidity of the body (16) by itself measured according to this orientation on the other hand is at least equal to 10, these rigidity measurements being carried out for a relative elongation of 2%;

l) the porosity of the fabric (13) is at least equal to 50%;

m) the permeability of the fabric (13) is at least equal to $10^{-11}$ $m^2.Pa^{-1}.s^{-1}$ for a fluid whose viscosity is 1 Pa.s.

2. A ply according to claim 1 characterised in that the reinforcement threads (9) are comprised of warp threads and/or woof threads of the fabric (13).

3. A ply according to claim 2, characterised in that the reinforcement threads replace warp threads or woof threads of the body (16).

4. A ply according to any of claims 1 to 3, characterised in that the body (16) is formed at least in part, of warp threads and woof threads, such that the warp threads have a mean orientation which is parallel to the sides of the ply (7, 8), the reinforcement threads forming within the fabric (13) woof threads whose orientation is parallel to that of the woof threads of the body and forms a nonzero angle other than 90° with the mean orientation of the warp threads.

5. A ply according to any of claims 1—3, characterised in that the body (16) is formed at least in part, of warp threads and woof threads in such a manner that the reinforcement threads form woof threads within the fabric (13), whose orientation is parallel to that of the woof threads˜ of the body and perpendicular to the sides of the ply (7, 8) which are parallel to the mean orientation of the warp threads of the body (16).

6. A ply according to any of claims 1—3 characterised in that the body (16) is formed at least in part, of warp threads and woof threads in such a manner that the reinforcement threads form warp threads within the fabric (13) whose orientation is parallel to the means orientation of the warp threads of the body, and to the sides of the ply (7, 8).

7. A ply according to any of claims 1—6 characterised in that the reinforcement threads (9) on the one hand and the threads (17, 18) of the body (16) on the other hand are made of different materials.

8. A ply according to any of claims 1—7, characterised in that the reinforcement threads (9) are made of an aromatic polyamide.

9. A ply according to any of claims 1—8, characterised in that the body (16) is made at least in part, of a thermoplastic material.

10. A ply according to any of claims 1—9, characterised in that the permeability of the fabric (13) varies from 500 to 1000—$10^{-11}$ $m^2.Pa^{-1}.s^{-1}$ for a fluid whose viscosity is 1 Pa.s.

11. A ply according to any of claims 1—10, characterised in that the porosity of the fabric (13) varies between 70% to 90%.

12. A ply according to any of claims 1—11 characterised in that the ratio between the rigidity of the fabric (13) and the rigidity of the body (16) by itself is at least equal to 40.

13. A ply according to any of claims 1—12, characterised in that the reinforcement threads (9) are monofilament threads and undulate slightly, the rate of undulation of these threads being less than 10%.

14. A ply according to any of claims 1—13, characterised in that it is impregnated with at least one material forming part of the structure of the tire (1) in which it is intended to be used.

15. A tire (1) having at least one reinforcement ply (7, 8) according to any of claims 1—14.

16. A tire (1) according to claim 15, characterised in that in the vicinity of the equatorial plane of the tire, the reinforcement threads (9) are arranged practically within one or more cylinders whose axis of revolution is the axis of revolution of the tire.

17. A tire (1) according to any of claims 15 or 16, characterised in that the body (16) is formed at least in part of warp threads (17) and of woof threads (18) such that, in the vicinity of the equatorial plane of the tire, the woof threads (18) of the body (16) are arranged practically within several cylinders, whose axis of revolution is the axis of revolution of the tire (1).

18. A tire (1) according to any of claims 15—17, characterised in that at least one reinforcement ply (7, 8) forms at least in part, one face of the tire, the reinforcement threads (9) being without contact with this face.

19. A method for manufacturing a tire (1), in accordance with any of claims 15—18, characterised in that at the time of manufacture, at least one reinforcement ply (7, 8) according to any of claims 1—14, is arranged directly on a part of a casting mold or building drum, the reinforcement threads (9) being without contact with the principal face (14, 15) of the fabric (13) which is in contact with the mold or the building drum.

Fig. 1

Fig. 2

## Fig. 3

## Fig. 4

Fig. 5

Fig. 6